Europäisches Patentamt

European Patent Office

Office européen des brevets

(19)

(11) EP 0 911 644 A1

## (12) DEMANDE DE BREVET EUROPEEN

(43) Date de publication:
28.04.1999 Bulletin 1999/17

(51) Int Cl.$^6$: G01S 5/14

(21) Numéro de dépôt: 98402676.5

(22) Date de dépôt: 27.10.1998

(84) Etats contractants désignés:
AT BE CH CY DE DK ES FI FR GB GR IE IT LI LU MC NL PT SE
Etats d'extension désignés:
AL LT LV MK RO SI

(30) Priorité: 27.10.1997 FR 9713434

(71) Demandeur: ALCATEL
75008 Paris (FR)

(72) Inventeurs:
• Vogel, Hélène
38240 Meylan (FR)
• Galligo, Michel
75003 Paris (FR)

(74) Mandataire: El Manouni, Josiane et al
Compagnie Financiere Alcatel,
DPI,
30, avenue Kléber
75116 Paris (FR)

(54) **Dispositif de mesure de distance entre une station mobile et une station de base dans un système de radiocommunications mobiles**

(57) Dispositif de mesure de distance entre une station mobile et une station de base dans un système de radiocommunications mobiles, ce dispositif comportant des moyens pour déterminer l'instant de réception, par la station mobile, de données prédéterminées émises par la station de base, ces moyens comportant eux-mêmes des moyens (4) pour effectuer une corrélation entre des composantes dites en phase, respectivement en quadrature, d'un signal modulé reçu par la station mobile, et des composantes dites en phase, respectivement en quadrature, d'un signal de référence généré dans la station mobile et correspondant auxdites données prédéterminées, ces moyens de corrélation fournissant des composantes dites respectivement réelles et imaginaires de coefficients dits de corrélation, et ce dispositif étant essentiellement caractérisé en ce qu'il comporte en outre des moyens (7) pour déterminer, à partir des composantes réelles et imaginaires de coefficients de corrélation, une grandeur complexe dont la phase varie de manière continue en fonction dudit instant de réception.

FIG_3

## Description

La présente invention concerne d'une manière générale les systèmes de radiocommunications mobiles.

La présente invention concerne plus particulièrement un dispositif pour mesurer la distance, ou le temps de propagation, entre une station mobile et une station de base, dans un tel système.

Une telle connaissance de la distance, ou du temps de propagation, peut être utilisée à diverses fins, telles que à titre d'exemple:

- dans un système de radiocommunications mobiles du type à accès multiple par répartition temporelle, ou TDMA (pour "Time Division Multiple Access"), tel que notamment le système GSM (pour "Global System for Mobile communications"), pour déterminer l'avance temporelle (ou "timing advance") à appliquer aux informations issues de la station mobile afin de permettre à ces informations d'être reçues à la station de base dans celui des canaux temporels qui a été alloué à cette station mobile, quel que soit le temps de propagation entre cette station mobile et cette station de base,

- dans un système de radiocommunications mobiles du type cellulaire (tel que, également, le système GSM précité), pour contrôler la puissance d'émission par la station mobile en fonction de sa distance par rapport à la station de base en vue de réduire le niveau global d'interférence dans le système, ou encore pour localiser la station mobile, par exemple en combinant le résultat d'une telle mesure de distance de cette station mobile par rapport à une station de base, avec des résultats de mesure de distance de cette station mobile par rapport à d'autres stations de base.

Pour déterminer le temps de propagation, ou la distance, entre une station mobile et une station de base dans un système de radiocommunications mobiles, il est connu de déterminer l'instant de réception, par la station mobile, de données prédéterminées émises par la station de base, telles que notamment une séquence dite d'apprentissage (utilisée, de manière connue, pour effectuer une estimation du canal de transmission, préalable à une égalisation des signaux reçus à travers ce canal de transmission). Cet instant de réception, une fois déterminé, peut être communiqué à la station de base qui, par comparaison avec l'instant d'émission de ces données, et sachant par ailleurs que la station mobile se synchronise en permanence sur la station de base, peut en déduire le temps de propagation, c'est-à-dire la distance recherchée.

Il est en outre connu, pour déterminer un tel instant de réception par la station mobile, d'effectuer une corrélation entre le signal modulé reçu par la station mobile et un signal de référence généré dans la station mobile et correspondant auxdites données prédéterminées. De manière connue, une telle corrélation est effectuée sur des signaux préalablement échantillonnés et numérisés, et comporte une mesure de similitude de ces deux signaux pour différentes positions temporelles de l'un par rapport à l'autre, obtenues en l'occurrence en décalant à chaque fois le signal de référence d'une période d'échantillonnage par rapport au signal reçu. Celle de ces positions, pour laquelle la similitude de ces deux signaux est la plus grande, est ainsi représentative de l'instant de réception, par la station mobile, desdites données prédéterminées.

De fait, suivant les méthodes connues, la précision sur la mesure instantanée du temps de propagation ne peut pas être meilleure que la période d'échantillonnage (ou encore la précision sur la mesure instantanée de distance ne peut pas être meilleure que le produit de la période d'échantillonnage par la vitesse de propagation des signaux). A titre d'exemple, pour un système de radiocommunications mobiles tel que le système GSM précité, une telle précision sur la mesure de distance est ainsi de l'ordre du kilomètre.

La présente invention a essentiellement pour but d'accroître cette précision.

Un des objets de la présente invention consiste ainsi dans un dispositif de mesure de distance entre une station mobile et une station de base dans un système de radiocommunications mobiles, ce dispositif comportant des moyens pour déterminer l'instant de réception, par la station mobile, de données prédéterminées émises par la station de base, ces moyens comportant eux-mêmes des moyens pour effectuer une corrélation entre des composantes dites en phase, respectivement en quadrature, d'un signal modulé reçu par la station mobile, et des composantes dites en phase, respectivement en quadrature, d'un signal de référence généré dans la station mobile et correspondant auxdites données prédéterminées, ces moyens de corrélation fournissant des composantes dites respectivement réelles et imaginaires de coefficients dits de corrélation, et ce dispositif étant essentiellement caractérisé en ce qu'il comporte en outre des moyens pour déterminer, à partir des composantes réelles et imaginaires de coefficients de corrélation, une grandeur complexe dont la phase varie de manière continue en fonction dudit instant de réception.

Un autre objet de la présente invention consiste dans une station mobile comportant de tels moyens pour effectuer une mesure de l'instant de réception de données prédéterminées émises par une station de base dans un système de radiocommunications mobiles.

D'autres objets et caractéristiques de la présente invention apparaîtront à la lecture de la description suivante d'un exemple de réalisation, faite en relation avec les dessins ci-annexés dans lesquels:

- la figure 1 est un schéma destiné à rappeler le type de moyens à prévoir, dans une station mobile, pour réaliser une mesure de distance entre cette station mobile et une station de base, suivant l'art antérieur,
- les figures 2a, 2b et 2c sont des diagrammes destinés à rappeler le principe d'une telle mesure de distance suivant l'art antérieur,
- la figure 3 est un schéma destiné à illustrer le type de moyens à prévoir, dans une station mobile, pour réaliser une mesure de distance entre cette station mobile et une station de base, suivant l'invention,
- les figures 4a et 4b sont des diagrammes destinés à faire comprendre le principe d'une telle mesure de distance suivant l'invention.

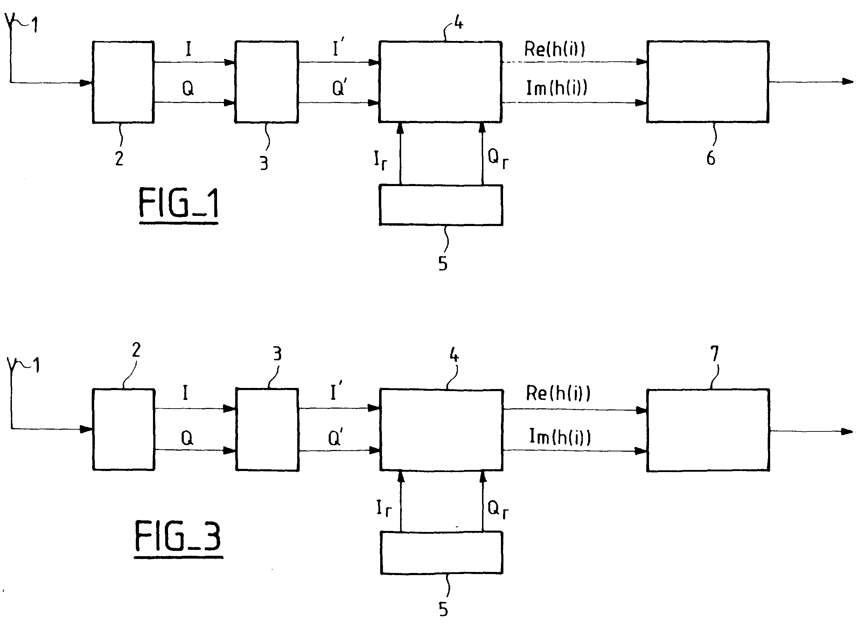

Le schéma illustré sur la figure 1 comporte, dans l'ordre:

- une antenne 1,
- un étage de conversion de fréquence 2, fournissant, de manière connue, deux composantes, l'une dite en phase I, et l'autre dite en quadrature Q, d'un signal modulé reçu par la station mobile sur l'antenne 1,
- un convertisseur analogique-numérique 3, fournissant des composantes I' et Q' correspondant respectivement aux composantes I et Q,
- un corrélateur 4 recevant, outre les composantes I' et Q' correspondant au signal modulé reçu par la station mobile, des composantes en phase Ir et en quadrature Qr correspondant à un signal de référence généré dans la station mobile et correspondant à des données prédéterminées émises par la station de base, ces composantes Ir et Qr étant en l'occurrence issues d'une mémoire 5.

Le corrélateur 4 effectue une corrélation sur les composantes en phase et une corrélation sur les composantes en quadrature, et fournit ainsi deux jeux de coefficients, l'un noté Re(h(i)), l'autre noté Im(h(i)), avec i variant de 1 à k (où k désigne le nombre de positicns temporelles respectives considérées du signal reçu et du signal de référence), et Re(h(i)) et Im(h(i)) désignant respectivement la composante réelle et la composante imaginaire du coefficient de corrélation h(i).

Le dispositif rappelé sur la figure 1 comporte en outre des moyens 6 pour déterminer celui des coefficients de corrélation h(i) qui est de plus grande amplitude, l'instant d'obtention de ce coefficient étant ainsi représentatif de l'instant de réception par la station mobile desdites données prédéterminées. Cet instant de réception peut être communiqué à la station de base qui, par comparaison avec l'instant d'émission de ces données, et sachant par ailleurs que la station mobile se synchronise en permanence sur la station de base, peut en déduire le temps de propagation, c'est-à-dire la distance recherchée.

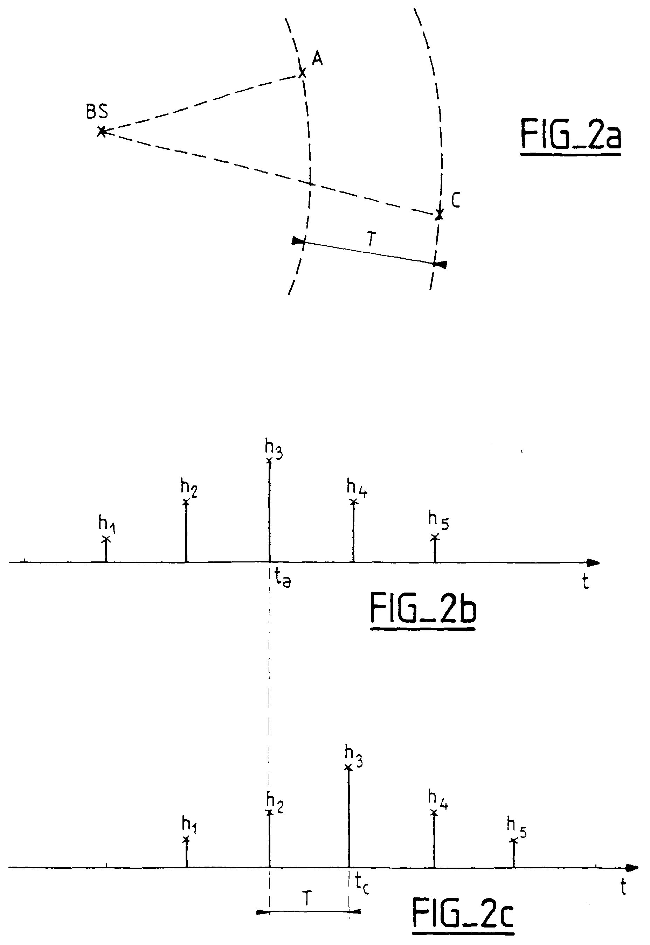

A titre d'exemple, la figure 2b illustre un exemple d'obtention de coefficients de corrélation h(i) en fonction du temps "t", le coefficient de corrélation de plus grande amplitude (en l'occurrence le coefficient "h3") étant ici obtenu à un instant "ta" correspondant à une station mobile située, comme illustré sur la figure 2a, en un point A.

A titre d'exemple, la figure 2c illustre un autre exemple d'obtention de coefficients de corrélation h(i) en fonction du temps, le coefficient de corrélation de plus grande amplitude (en l'occurrence également le coefficient "h3") étant ici obtenu à un instant "tc", correspondant à une station mobile située, comme illustré sur la figure 2a, en un point C distant du point A d'une distance correspondant à une différence de temps de propagation égale à T (où T désigne la période d'échantillonnage).

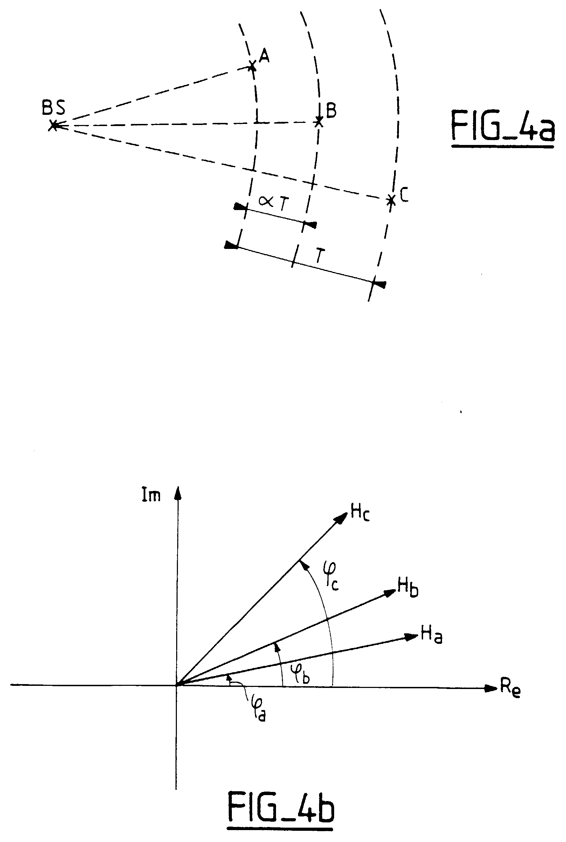

Suivant l'art antérieur ainsi rappelé, il n'est pas possible d'accéder à un instant de réception correspondant à une station mobile située, comme illustré sur la figure 4a, en un point B distant du point A d'une distance correspondant à une différence de temps de propagation écale à $\alpha.T$ (avec $0<\alpha<1$), où T désigne la période d'échantillonnage.

Avec la présente invention, il devient au contraire possible d'accéder à de tels instants de réception.

Le dispositif suivant l'invention, illustré sur la figure 3, se distingue de celui illustré sur la figure 1 en ce qu'il comporte, au lieu des moyens 6, des moyens 7 pour déterminer, à partir des composantes réelles et imaginaires de coefficients de corrélation h(i), une grandeur complexe dont la phase varie de manière continue en fonction dudit instant de réception. Les coefficients de corrélation pris en compte par les moyens 7 peuvent être soit l'ensemble de ces coefficients, soit les plus significatifs d'entre eux si certains sont de trop faible amplitude.

A titre d'exemple, la composante réelle de ladite grandeur complexe peut être égale à la somme des composantes réelles des coefficients de corrélation h(i) considérés, et la composante imaginaire de ladite grandeur complexe peut être égale à la somme des composantes imaginaires des coefficients de corrélation h(i) considérés, ladite grandeur complexe s'écrivant alors:

$$\sum_i \mathrm{Re}(h(i)) + j . \sum_i \mathrm{Im}(h(i)).$$

Suivant un autre exemple ladite grandeur complexe peut être égale à la somme des modules des coefficients complexes h(i) considérés, multipliés un à un par la valeur complexe exp(j.i.$\pi$/2), ladite grandeur complexe s'écrivant alors:

$$\sum_{i} \left| Re(h(i))+j.Im(h(i) \right| .exp(j.i.\frac{\pi}{2}).$$

Dans les deux exemples précédents, lesdites sommes pourraient aussi, suivant un autre exemple, être des sommes pondérées; il pourrait aussi, suivant d'autres exemples, s'agir de fonctions autres que des sommes ou des sommes pondérées, à condition que la phase de la grandeur complexe ainsi obtenue varie de manière continue en fonction dudit instant de réception. Ladite variation continue peut par exemple être suivant une fonction affine, ou linéaire.

Ainsi, dans le plan complexe illustré sur la figure 4b, le vecteur Ha, correspondant à la grandeur complexe obtenue pour une station mobile localisée au point A, fait un angle $\varphi a$ avec l'axe Re des réels, le vecteur Hb, correspondant à la grandeur complexe obtenue pour une station mobile localisée au point B, fait avec l'axe des réels, un angle $\varphi b$, et le vecteur Hc, correspondant à la grandeur complexe obtenue pour une station mobile localisée au point C, fait avec l'axe des réels un angle $\varphi c$, l'angle $\varphi$ ($\varphi a$, $\varphi b$, $\varphi c$) étant par exemple une fonction linéaire de l'instant de réception.

Grâce à cela, il devient possible d'accéder à un instant de réception correspondant à une station mobile située, comme illustré sur la figure 4a, en un point B distant du point A d'une distance correspondant à une différence de temps de propagation égale à $\alpha.T$ (avec $0<\alpha<1$), où T désigne la période d'échantillonnage.

La présente invention permet ainsi d'obtenir une précision meilleure que la période d'échantillonnage pour la mesure dudit instant de réception par la station mobile, et donc pour la mesure du temps de propagation (ou de la distance) entre station mobile et station de base, cette précision n'étant de fait plus limitée alors que par la qualité des signaux reçus.

**Revendications**

1.   Dispositif de mesure de distance entre une station mobile et une station de base dans un système de radiocommunications mobiles, ce dispositif comportant des moyens pour déterminer l'instant de réception, par la station mobile, de données prédéterminées émises par la station de base, ces moyens comportant eux-mêmes des moyens (4) pour effectuer une corrélation entre des composantes dites en phase, respectivement en quadrature, d'un signal modulé reçu par la station mobile, et des composantes dites en phase, respectivement en quadrature, d'un signal de référence généré dans la station mobile et correspondant auxdites données prédéterminées, ces moyens de corrélation fournissant des composantes dites respectivement réelles et imaginaires de coefficients dits de corrélation, et ce dispositif étant caractérisé en ce qu'il comporte en outre des moyens (7) pour déterminer, à partir des composantes réelles et imaginaires de coefficients de corrélation, une grandeur complexe dont la phase varie de manière continue en fonction dudit instant de réception.

2.   Dispositif selon la revendication 1, caractérisé en ce que ladite variation continue est suivant une fonction affine, ou linéaire.

3.   Station mobile pour système de radiocommunications mobiles, ladite station mobile comportant des moyens pour déterminer l'instant de réception de données prédéterminées émises par une station de base dans un tel système, ces moyens comportant eux-mêmes des moyens (4) pour effectuer une corrélation entre des composantes dites en phase, respectivement en quadrature, d'un signal modulé reçu par la station mobile, et des composantes dites en phase, respectivement en quadrature, d'un signal de référence généré dans la station mobile et correspondant auxdites données prédéterminées, ces moyens de corrélation fournissant des composantes dites respectivement réelles et imaginaires de coefficients dits de corrélation, et cette station mobile étant caractérisée en ce qu'elle comporte en outre des moyens (7) pour déterminer, à partir des composantes réelles et imaginaires de coefficients de corrélation, une grandeur complexe dont la phase varie de manière continue en fonction dudit instant de réception.

EP 0 911 644 A1

FIG_1

I

Q

I′

Q′

Re(h(i))

Im(h(i))

1

2

3

4

5

6

$I_r$

$Q_r$

FIG_3

I

Q

I′

Q′

Re(h(i))

Im(h(i))

1

2

3

4

5

7

$I_r$

$Q_r$

FIG_2a

FIG_2b

FIG_2c

FIG_4a

FIG_4b

**Office européen des brevets**

**RAPPORT DE RECHERCHE EUROPEENNE**

Numero de la demande

EP 98 40 2676

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 5 184 135 A (PARADISE RONALD Y) 2 février 1993 | 1 | G01S5/14 |
| A | * abrégé * <br> * colonne 1, ligne 15 - ligne 53 * <br> * colonne 2, ligne 38 - ligne 52 * <br> * figures 1,2A * <br> --- | 2,3 | |
| A | US 5 512 908 A (HERRICK DAVID L) 30 avril 1996 <br> * abrégé * <br> * colonne 1, ligne 57 - ligne 67 * <br> * colonne 2, ligne 26 - ligne 60 * <br> * figures 1,2 * <br> --- | 1,3 | |
| A | US 5 670 964 A (DENT PAUL W) 23 septembre 1997 <br> * abrégé * <br> * colonne 2, ligne 17 - ligne 36 * <br> * colonne 4, ligne 41 - ligne 49 * <br> * colonne 5, ligne 19 - ligne 30 * <br> * figure 3 * <br> --- | 1,3 | |
| A | EP 0 600 796 A (SOC ET RECH ET CONST ELECTRONI) 8 juin 1994 <br> * abrégé * <br> * colonne 1, ligne 14 - ligne 27 * <br> * colonne 2, ligne 41 - ligne 55 * <br> * colonne 3, ligne 12 - ligne 21 * <br> * colonne 8, ligne 34 - ligne 54 * <br> * figures 3,4,9-11 * <br> ----- | 1,3 | **DOMAINES TECHNIQUES RECHERCHES** (Int.Cl.6) <br><br> H04Q <br> G01S |

Le présent rapport a été établi pour toutes les revendications

| Lieu de la recherche | Date d'achèvement de la recherche | Examinateur |
|---|---|---|
| LA HAYE | 29 janvier 1999 | Gautier, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 98 40 2676

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-01-1999

| Document brevet cité au rapport de recherche | | Date de publication | Membre(s) de la famille de brevet(s) | | Date de publication |
|---|---|---|---|---|---|
| US 5184135 | A | 02-02-1993 | AUCUN | | |
| US 5512908 | A | 30-04-1996 | AU | 2964595 A | 09-02-1996 |
| | | | AU | 2964695 A | 09-02-1996 |
| | | | CA | 2171325 A | 25-01-1996 |
| | | | CA | 2171333 A | 25-01-1996 |
| | | | CN | 1134752 A | 30-10-1996 |
| | | | EP | 0720749 A | 10-07-1996 |
| | | | EP | 0717852 A | 26-06-1996 |
| | | | NZ | 289718 A | 26-08-1998 |
| | | | NZ | 289719 A | 24-02-1997 |
| | | | WO | 9602006 A | 25-01-1996 |
| | | | WO | 9602007 A | 25-01-1996 |
| US 5670964 | A | 23-09-1997 | US | 5404376 A | 04-04-1995 |
| | | | AU | 688375 B | 12-03-1998 |
| | | | AU | 7723194 A | 27-03-1995 |
| | | | CN | 1115196 A | 17-01-1996 |
| | | | EP | 0667999 A | 23-08-1995 |
| | | | FI | 952207 A | 08-05-1995 |
| | | | JP | 9504414 T | 28-04-1997 |
| | | | NZ | 273796 A | 29-01-1997 |
| | | | SG | 52345 A | 28-09-1998 |
| | | | WO | 9507587 A | 16-03-1995 |
| EP 0600796 | A | 08-06-1994 | FR | 2698966 A | 10-06-1994 |
| | | | DE | 69313790 D | 16-10-1997 |
| | | | DE | 69313790 T | 30-04-1998 |

EPO FORM P0460

Pour tout renseignement concernant cette annexe : voir Journal Officiel de l'Office européen des brevets, No.12/82